Europäisches Patentamt

European Patent Office

Office européen des brevets

(19)

(11) Veröffentlichungsnummer: **0 416 649 A2**

# (12) EUROPÄISCHE PATENTANMELDUNG

(21) Anmeldenummer: 90117287.4

(22) Anmeldetag: 07.09.90

(51) Int. Cl.5: **B01J 19/32**

(30) Priorität: 08.09.89 CS 5183/89
08.09.89 CS 5184/89
05.01.90 CS 64/90
05.01.90 CS 65/90

(43) Veröffentlichungstag der Anmeldung:
**13.03.91 Patentblatt 91/11**

(84) Benannte Vertragsstaaten:
**CH DE IT LI**

(71) Anmelder: **VYZKUMNY USTAV CHEMICKYCH ZARIZENI**

Krizikova 70
Brno(CS)

(72) Erfinder: **Braun, Vlastimil, Dipl.-Ing.**
**Langrova 18**
**Brno(CS)**

(74) Vertreter: **Patentanwälte Beetz sen. - Beetz jun. Timpe - Siegfried - Schmitt-Fumian-Mayr**
**Steinsdorfstrasse 10**
**W-8000 München 22(DE)**

(54) **Orientierte Kolonnenfüllung.**

(57) Gegenstand der Erfindung ist eine orientierte Füllung von Kolonnen für Diffusionsprozesse wie Rektifizierung bzw. Absorption oder für Wärmeaustauschprozesse aufgrund des direkten Kontakts einer flüssigen mit einer gasförmigen Phase.

Diese orientierte Kolonnenfüllung besteht aus horizontalen, gegenseitig verdrehten und den gesamten Kolonnenquerschnitt ausfüllenden Schichten. Jede Schicht besteht aus vertikalen Wänden (4) aus nachgiebigem nichtmetallischem kapillaraktivem Material, das durch ein Bewehrungsgeflecht (7; 9) aus starrem Material, beispielsweise Metall, verstärkt ist. Die Wände (4) sind zu schräg zur Vertikalen orientierten Wellen gestaltet bzw. geformt.

*FIG.1*

Xerox Copy Centre

EP 0 416 649 A2

# ORIENTIERTE KOLONNENFÜLLUNG

Die Erfindung betrifft eine orientierte Füllung von Kolonnen für Diffusionsprozesse wie Rektifizierung bzw. Absorption oder für Wärmeaustauschprozesse aufgrund des direkten Kontakts einer flüssigen mit einer gasförmigen Phase.

Für solche Prozesse werden bisher überwiegend sog. nichtorientierte Kolonnenfüllungen aus Schüttgut bzw. Granulat verwendet.

Seit einiger Zeit existieren auch bereits Füllungen mit einer bestimmten Orientierung, die zwar teurer als Granulatfüllungen sind, aber höhere Durchsatzleistungen der Kolonnen bei verbesserter Trennfähigkeit, weiterem Arbeitsbereich und niedrigeren Druckverlusten ermöglichen. Die am häufigsten vewendeten orientierten Kolonnenfüllungen sind Blöcke aus vertikal bzw. hochkant angeordneten Bändern, die schräg zur Vertikalen gewellt bzw. gefaltet sind. Die Bänder sind in den Blöcken so nebeneinander angeordnet, daß sich ihre Falten bzw.Wellungen kreuzen, so daß sich benachbarte Bänder nur in den Kreuzungspunkten berühren. Die Blöcke sind nebeneinander in Schichten angeordnet, die den ganzen Querschnitt der Kolonne ausfüllen und übereinander mit einer gegenseitigen Winkelversetzung ausgerichtet sind. Die Bänder bestehen meist aus Metall und sind verschiedenartig strukturiert und perforiert, damit die Flüssigkeit von einer Seite des Bandes zur anderen fließen und gleichzeitig die beiden Seiten des Bandes in möglichst hohem Maße benetzen kann. Neben z.B. Edelstahlbändern werden auch Bänder aus Kunststoffen, keramischen Materialien usw. eingesetzt. Die Nachteile derartiger bekannter orientierter Kolonnenfüllungen bestehen darin, daß die Bandmaterialien - insbesondere legierte Stahle - hohe Oberflächenspannungen gegenüber Flüssigkeiten aufweisen. Infolgedessen wird das Metall nie ganz benetzt und die so entstandenen trockenen Stellen vermindern die Übergangsoberfläche für die beiden Phasen. Darüberhinaus spielt auch der hohe Preis von legierten metallischen Materialien seine Rolle.

Aufgabe der Erfindung ist es, eine Füllung für Reaktionskolonnen zu schaffen, die bei geringerem Preis eine wesentlich bessere Leistung durch extreme Vergrößerung der aktiven Oberflächen ermöglicht.

Diese Aufgabe wird erfindungsgemäß durch die im Patentanspruch 1 angegebenen Merkmale gelöst.

Die einzelnen Schichten der orientierten Füllung bestehen aus vertikalen tafelförmigen, in einem Rahmen gespannten Elementen von z.B. Webstruktur. Als Kettfäden dieser Struktur sind relativ dicht nebeneinander verlaufende Bänder oder Filamente aus einem nachgiebigen Material mit Kapillareigenschaften, z.B. Spinnglas, und die Schußfäden sind zweckmäßig zickzacklinienförmig verlaufende Spreizelemente aus starrem Material wie Metall, Kunststoff oder Keramik. Im Oberteil können die Spreizelemente Durchgangslöcher aufweisen und gegebenenfalls quer oder schräg flachwellig sein. In einer solchen Webstruktur entstehen günstige Bedingungen für den Fluß beider Medien, so daß die Druckverluste wesentlich verringert und die Trennfähigkeit verbessert werden. Darüber hinaus bewirken die kapillaraktiven Bänder in der Kette der Webstruktur ein gutes Benetzungsvermögen der ganzen Oberfläche der Füllung, da solche Bänder die Flüssigkeit auch in horizontaler Richtung verteilen können. So gewinnt die Kolonnenfüllung eine Selbsttrennfähigkeit und macht gesonderte Flüssigkeitsverteiler überflüssig. Vorteilhaft ist auch der relativ niedrige Preis dieser Füllung, da die Ausgangsmaterialien billig sind.

Die positiven Eigenschaften der oben beschriebenen Kolonnenfüllung sind auch bei einer anderen Ausführung vorhanden, bei welcher der größere Teil von metallischem Material wiederum durch ein nachgiebiges nicht-metallisches Material mit guten Kapillareigenschaften ersetzt ist. Bei dieser Ausführung wechseln in den horizontalen Schichten vertikale Wände aus einer Kapillareigenschaften in horizontaler sowie in vertikaler Richtung aufweisenden Textilware mit einem System von vertikalen zickzackförmigen Spreizelementen aus starrem Material, wie Metall, Kunststoff oder Keramik, ab. Die Spreizelemente sind an den Enden zu Tragbändern befestigt und können mit querorientierten Distanzelementen verbunden sein. Nach einer Alternati ve sind die übereinstimmend zickzackförmigen Spreizelemente mit Reihen von abwechselnd nach beiden Seiten abgebogenen Spreizelementen verbunden, so daß eine rhombische Stützstruktur entsteht.

Bei den Kolonnenfüllungen werden erfindungsgemäß die Vorteile von nachgiebigen nichtmetallischen Materialien mit ausgezeichneten Kapillareigenschaften in vertikaler sowie in horizontaler Richtung gezielt ausgenutzt, wobei die damit kombinierte Stützstruktur die für die hohe Wirksamkeit der Füllung bedeutungsvolle Formhaltigkeit gewährleistet. Eine Füllung aus horizontalen, gegeneinander winkelversetzten bzw. verdrehten Schichten, die den gesamten Querschnitt der Kolonne ausfüllen und aus Wänden von nachgiebigem nichtmetallischem Material mit Kapillareigenschaften bestehen, weist in bzw. an den vertikalen Wänden ein Bewehrungsgeflecht aus starrem Material, z.B. Metall, auf. Die Wände sind zu schräg zur Vertikalen orientierten Wellen geformt und mit gegensinniger Schräge aufrecht nebeneinander in der jeweiligen Schicht angeordnet.

Im einfachsten Fall können die vertikalen Wände aus einem Gewebe bestehen, in dem Drähte von starrem, vorzugsweise mteallischem Material mit Filamenten bzw. Litzen von nachgiebigem nichtmetallischem Material, z.B. Glas, im Schuß sowie in der Kette abwechseln. Die derart versteiften Wände werden dann wellenförmig gefaltet und aufrecht nebeneinander zu horizontalen Schichten so gelegt, daß sich die Wellen der benachbarten Wände miteinander kreuzen und schräge lineare Kanäle für die Passage der gasförmigen Phase bilden. Das eingewebte metallische Geflecht behindert die Faltung bzw. Wellung der Wand nicht und gewährleistet die erwünschte Stabilität der Füllungsstruktur.

Nach einer Alternative kann anstelle des eingewebten Bewehrungsgeflechts eine äußere Armierung benutzt werden. Dabei bestehen die einzelnen vertikalen Wände aus einem nachgiebigen, nichtmetallischen Gewebe oder Vlies mit Kapillareigenschaften, z.B. Spinnglas, das zumindest an einer Seite über die Gesamtfläche mit dem Bewehrungsgeflecht aus starrem Material, z.B. Metall, versteift und zusammen mit diesem zu schräg zur Längsachse orientierten Wellen gestaltet ist. Die Maschenweite des Bewehrungsgeflechts sollte zweckmäßig mindestens um eine Zahlenordnung größer als der Abstand der Litzen des kapillaraktiven Gewebes sein.

Als nichtmetallisches Material mit Kapillareigenschaften in allen Richtungen hat sich ein Glasgewebe mit einer komplizierteren Bindung als Leinwandbindung als besonders günstig erwiesen. Darüberhinaus kann das Gewebe perforiert sein, was jedoch nicht notwendig ist, da die Flüssigkeit auf die andere Gewebeseite an jeder Stelle seiner Fläche überströmt. Da das relativ flexible Gewebe die erforderliche Form nicht aufrechterhalten und die Belastung der oberen Schichten nicht tragen kann, übernimmt das Bewehrungsgeflecht die Funktion eines Tragelementes, das die Stabilität der Füllungsstruktur sicherstellt. Für die Bewehrung eignet sich vor allem Drahtgeflecht aus legiertem Material, das mit kapillaraktivem Gewebe entweder überzogen ist oder welches das Gewebe überdecken kann. Die Armierung ist entweder an einer Seite des Gewebes oder zumindest teilweise auch an der anderen Gewebeseite vorgesehen. Ein Band aus derart gefertigtem Material wird zu schrägen Wellen von unterschiedlichem Profil geformt, worauf die gewellten versteiften kapillaraktiven Wände nebeneinander zu horizontalen Schichten so angeordnet wer den, daß sich die Wellen von benachbarten Schichten miteinander kreuzen.

Eine andere Ausführung besteht darin, daß das Gewebe aus nachgiebigem nichtmetallischem Material durch einen Verbundstoff aus anorganischen Fasern, wie z.B. Glas- oder Basaltfasern, ersetzt werden kann; diese werden mit Hilfe eines anorganischen Bindemittels miteinander verbunden. Der Verbundstoff wird nachher zumindest von einer Seite mit einem Geflecht aus starrem, vorzugsweise metallischem Material armiert und zusammen mit ihm zu schräg zu seiner Längsachse orientierten Wellen gestaltet. Vorteilhaft gegenüber den obigen Ausführungen ist eine Unterdrückung von unerwünschten By-pass-Strömen der Flüssigkeit entlang der Schichthöhe. Die Fasern des Verbundstoffes, der entweder aus kurzen Litzen oder endlosen Monofilamenten besteht, bilden nämlich in Vertikalrichtung nicht eine solche Kapillarstruktur wie Gewebe. Deswegen geht die Flüssigkeit durch die innere Struktur des Verbundstoffes nur nach geringen Abschnitten hindurch, worauf sie gezwungen wird, die Struktur zu verlassen und sich mit den an der Oberfläche des Verbundstoffes fortschreitenden Flüssigkeitsanteilen zu vermischen. So nimmt das ganze Volumen der Flüssigkeit infolge des wiederholten Vermischens und Aufteilens der beiden Flüssigkeitsanteile am Übergang der Wärme und Masse zwischen der Flüssigkeit und dem am Verbundstoff vorbeiströmenden Gas praktisch komplett teil.

Ein analoger Effekt ist auch bei einer Füllung erzielbar, bei welcher die vertikalen Wände anstelle des Gewebes bzw. Verbundstoffes einzelne Bänder aus nachgiebigem nichtmetallischen Material mit Kapillareigenschaften enthalten. Die Bänder liegen knapp nebeneinander senkrecht zur Ver tikalachse der Wand, sind beidseitig mit einem Geflecht aus starrem, vorzugsweise metallischem Material versteift und zusammen mit ihm zu schräg zur Vertikalen orientierten Wellen geformt. Auch bei dieser Ausführung kommt es zum vielfachen, wiederholten Vermischen und Aufteilen der Flüssigkeitsanteile entlang der Schichthöhe. Prinzipiell gilt dabei, daß je enger die Bänder sind und je öfter sich das Vermischen und die Aufteilung der Flüssigkeitsanteile wiederholen, desto höhere Trennfähigkeit in der Füllung erzielt werden kann. Die Schichthöhe bestimmt die Anzahl der Bänder; zum Erreichen des erforderlichen Effekts sind jedoch zumindest drei übereinander angeordnete Bänder nötig. Vorteilhaft soll die Breite der Bänder entlang der Schichthöhe von den engsten Bändern im Oberteil der Schicht zu den breitesten Bändern im Schichtunterteil abgestuft zunehmen. Die oberen schmalen Bänder nehmen dabei die Funktion eines natürlichen Flüssigkeitsverteilers am Eintritt in die einzelnen Schichten auf. Die Maschenweite des Bewehrungsgeflechts wird dann so gewählt, daß sie gleich oder geringer ist als die Breite des engsten Bandes.

Ein gemeinsamer Vorteil aller Ausführungen der erfindungsgemäßen Kolonnenfüllung besteht in den guten Kapillareigenschaften der Wandelemente, die die Verteilung der Flüssigkeit in Vertikalsowie Horizontalrichtung und damit die vollkommene Benetzung der gesamten Ausfüllungsoberfläche sicherstellen. Dies ermöglicht einen wesentlich höheren Wärme- und Masseübergang als bei herkömmlichen orientierten Füllungen und zwar bei konstantem, relativ niedrigem Druckverlust. Da in der Füllung mindestens ein durchgehender schräger Gaskanal entsteht, wird auch die Arbeitsleistung der Kolonne positiv beeinflußt. Darüberhinaus ermöglicht die Struktur der erfindungsgemäßen Kolonnenfüllung eine wiederholte Vermischung der Flüssigkeit, was die Trennfähigkeit der Füllung im ganzen Arbeitsbereich begünstigt. Ferner ist die Füllung kostengünstig, da die Menge an legiertem metallischem Material auf ein Minimum beschränkt ist.

Einige bevorzugte Ausführungen der erfindungsgemäßen orientierten Kolonnenfüllung werden im folgenden anhand der schematischen Zeichnungen näher erläutert. Es zeigen:

Fig. 1 einen vertikalen Axialschnitt durch einen Teil der Kolonne mit drei horizontalen, übereinander angeordneten Schichten der orientierten Füllung;

Fig. 2 einen Horizontal-Schnitt entlang der Linie A - A in Fig. 1;

Fig. 3 einen Teil einer geraden kapillaraktiven Wand aus einem Gewebe mit eingewebtem elastischem Geflecht;

Fig. 4 eine perspektivische Ansicht der versteiften, kapillaraktiven, schräg gewellten Wand nach Fig. 3;

Fig. 5 einen Teil einer geraden kapillaraktiven Wand aus einem nachgiebigen nichtmetallischen Gewebe, das an einer Seite mit metallischem Geflecht armiert ist;

Fig. 6 perspektivisch einen Teil einer kapillaraktiven, versteiften, schräg gewellten Wand nach Fig. 5;

Fig. 7 einen Teil einer geraden kapillaraktiven Wand aus einem einseitig von außen mit metallischem Geflecht armierten Verbundwerkstoff; und

Fig. 8 einen Teil einer geraden kapillaraktiven Wand, bei der das Gewebe bzw. der Verbundstoff durch gleich laufende Bänder aus nichtmetallischem Material mit Kapillarelgenschaften ersetzt ist, wobei die Breite der Bänder entlang der Wandhöhe abgestuft ist.

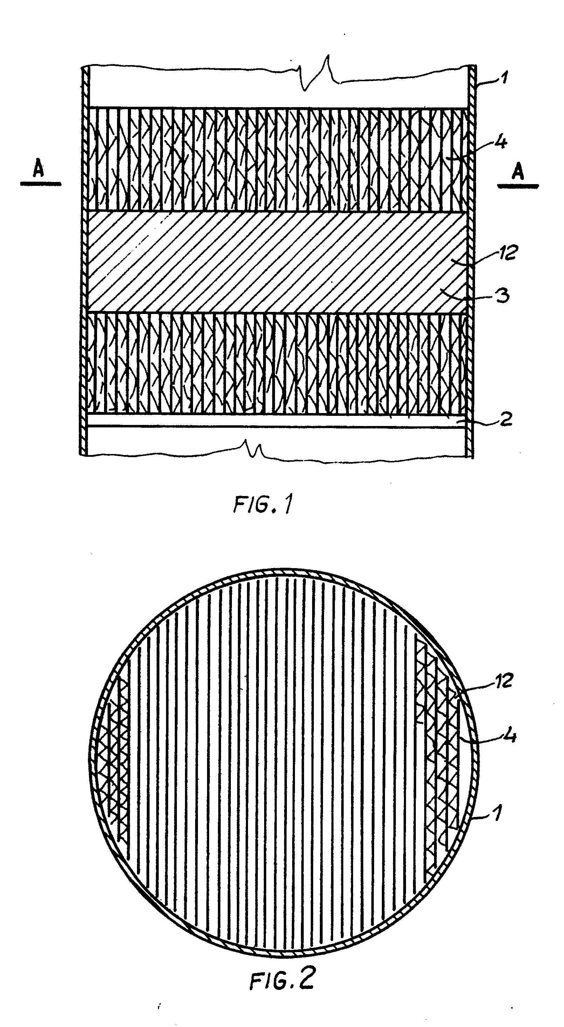

Wie in Fig. 1 gezeigt, ist in einem Kolonnenmantel 1 ein Traggitter 2 befestigt, auf dem horizontale Schichten 3 einer Füllung so übereinander angeordnet sind, daß benachbarte Schichten 3 um 90° verdreht sind. Jede Füllungsschicht 3 besteht aus versteiften kapillaraktiven Wänden 4, die schräg zur Vertikalen wellenförmig gestaltet und nebeneinander so angeordnet sind, daß sich die Wellen von benachbarten Wänden 4 miteinander kreuzen und sich miteinander lediglich an Wellenscheiteln berühren. Die Wände 4 begrenzen zwischeneinander schräge gasdurchlässige Kanäle 12.

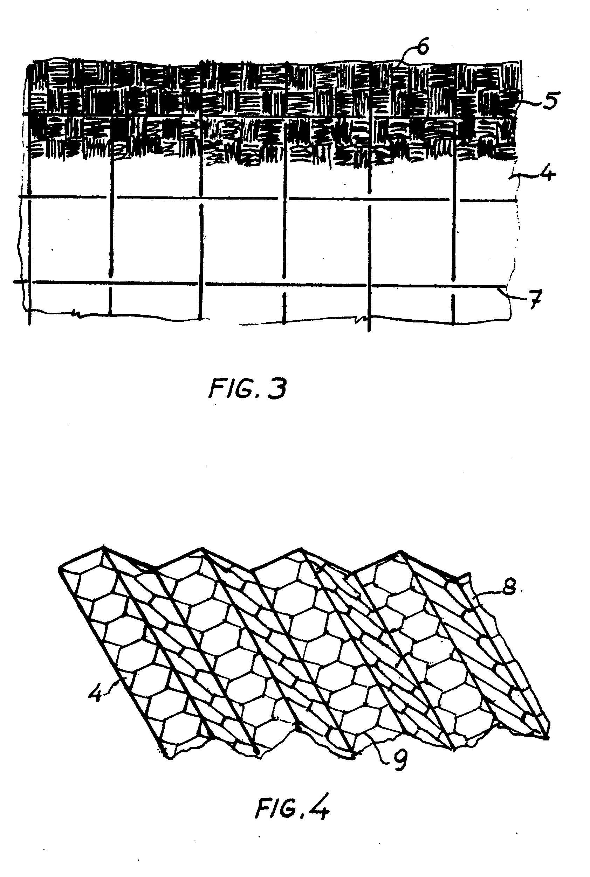

Fig. 3 zeigt im Detail einen Teil einer versteiften kapillaraktiven Wand 4, die aus einem Gewebe 5 mit eingewebtem Netz aus metallischen Filamenten bzw. Drähten 7 besteht. Die Litzen 6 des Gewebes sind gegeneinander versetzt ausgerichtet. Das derart armierte Gewebe 5 kann verschiedenartig - beispielsweise zu Wellen von gebrochenem Profil, sinusoiden-, mäanderförmig oder dergleichen - gestaltet sein. Figur 4 zeigt die versteifte kapillaraktive Wand 4 nach Fig. 3, die zu schrägen Wellen von gebrochenem Profil gefaltet ist.

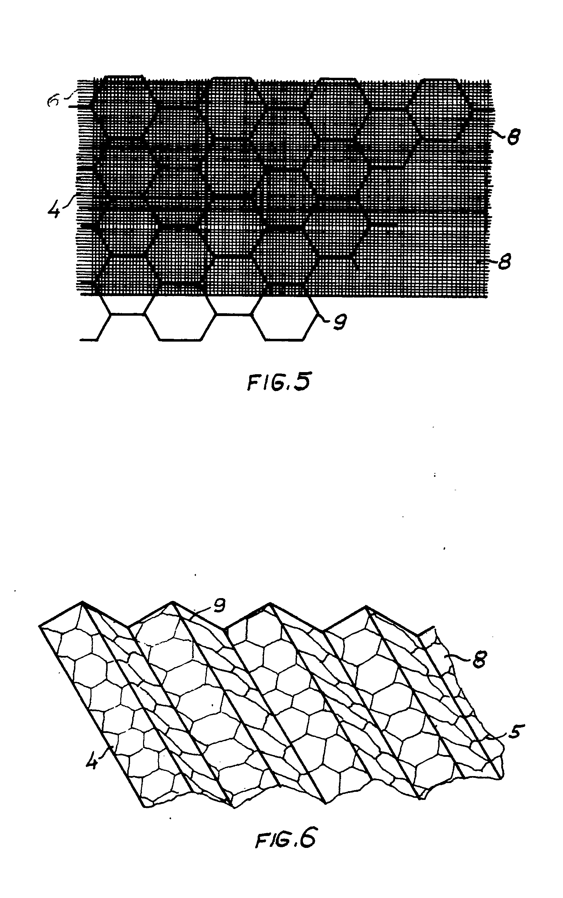

Die armierte kapillaraktive Wand 4 nach Fig. 5 ist durch ein kapillaraktives Gewebe 8 aus nachgiebigem nichtmetallischem Material und ein Bewehrungsgeflecht 9 aus starrem Material, vorzugsweise Metall; gebildet. Figur 5 zeigt auch einzelne Litzen 6 des Gewebes 8. In dieser Ausführung haben die Maschen des Bewehrungsgeflechts 9 die Form von regulären Sechsecken. Die Maschenweite entspricht etwa dem Zehnfachen des Abstands zwischen den einzelnen Litzen 6. Fig. 6 zeigt wiederum die versteifte kapillaraktive Wand 4 nach Fig. 5, die dort zu schrägen Wellen von gebrochenem Profil gestaltet ist.

Bei den Wänden 4 nach Fig. 5 und 6 ist das kapillaraktive Gewebe 8 lediglich an einer Seite armiert. Je nach der Art der Verbindung des kapillaraktiven Gewebes mit dem Bewehrungsgeflecht 9 kann es jedoch teilweise oder vollständig auch von der anderen Seite armiert sein. So kann das versteifte Gewebe 8 beispielsweise mäander- bzw. sinusoidenförmig gestaltet sein, so daß die Gaskanäle verschiedene Profile aufweisen, die sie dank der Versteifung der kapillaraktiven Wand auch während des Betriebes behalten. Das gilt für alle Typen der kapillaraktiven Wände.

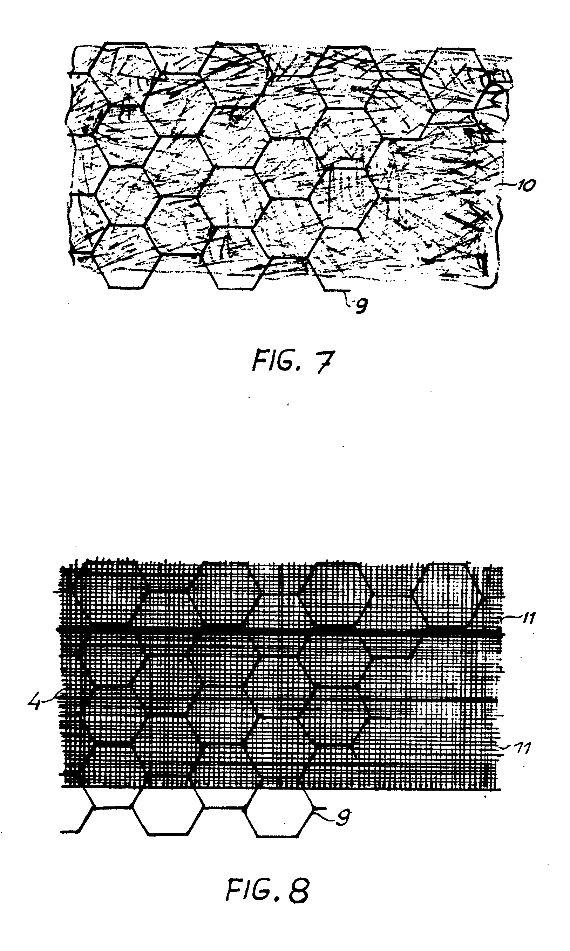

Die gerade versteifte kapillaraktive Wand 4 gemäß Figur 7 entspricht der Ausführung nach Fig. 5 mit der Ausnahme, daß das kapillaraktive Gewebe 8 hier durch einen Verbundstoff 10, z.B. in Form eines Faservlieses ersetzt ist. Die Maschen des Bewehrungsgeflechts 9 können auch hier die Form von regulären Sechsecken oder auch andere Gestalten und Abmessungen haben.

Die gerade, versteifte, kapillaraktive Wand 4 nach Fig. 8 besteht aus Bändern 11 von nachgiebigem nichtmetallischem Material mit Kapillareigenschaften, vorzugsweise Spinnglas. Die Wand 4 ist einseitig mit dem Geflecht 9 armiert. Die Weite der Maschen des Geflechts 9, die wiederum hexagonale Form haben, entspricht ungefähr der Breite der beiden engeren oberen Bänder 11.

Zur Herstellung der versteiften kapillaraktiven Wände 4 nach Fig. 8 werden die einzelnen Bänder 11 an mehreren Stellen aneinandergeheftet und zwischen zwei Schichten des Bewehrungsgeflechts 9 eingelegt. Danach erfolgt die Formung in schrägen Wellen. Im Prinzip kann auch bei dieser Ausführung das Geflecht eine unterschiedliche Anordnung und Maschenform haben, wobei die Maschenweite gleich oder geringer als die Breite der engsten Bänder 11 sein sollte.

Bei der Montage der Füllung in den Kolonnenmantel 1 werden die einzelnen armierten kapillaraktiven Wände so lange nebeneinander gelagert, bis sie den gesamten Querschnitt der Kolonne ausfüllen. Bei Kolonnen von größeren Durchmessern legt man jedoch nebeneinander nur eine beschränkte Anzahl der kapillaraktiven Wände 4. Diese werden dann mit Hilfe von Verbindungsschrauben bzw. Bändern zu Segmenten oder Blöcken zusammengezogen. Die Segmente bzw. Blöcke werden zuletzt in die Kolonne nebeneinander so eingesetzt, daß sie deren inneren Querschnitt vollständig ausfüllen.

**Ansprüche**

1. Orientierte Kolonnenfüllung aus horizontalen, gegenseitig verdrehten und den gesamten Kolonnenquerschnitt ausfüllenden Schichten,
dadurch **gekennzeichnet,**
daß jede Schicht aus vertikalen Wänden (4) aus nachgiebigem nichtmetallischem kapillaraktivem Material besteht, das durch ein Bewehrungsgeflecht (7; 9) aus starrem Material, beispielsweise Metall, verstärkt ist, und
daß die Wände (4) zu schräg zur Vertikalen orientierten Wellen gestaltet sind.

2. Kolonnenfüllung nach Anspruch 1,
dadurch gekennzeichnet,
daß die Wände (4) aus einem versteiften Gewebe (5) bestehen, in dem Drähte (7) aus starrem Material, beispielsweise Metall, angeordnet sind, wobei die Filamente bzw. Litzen (6) des Gewebes (5) aus nachgiebigem nichtmetallischem kapillaraktivem Material, beispielsweise Glas, im Schuß sowie in der Kette abwechseln.

3. Kolonnenfüllung nach Anspruch 1,
dadurch gekennzeichnet,
daß die Wände (4) durch ein Gewebe (8) aus nachgiebigem nichtmetallischem kapillaraktivem Material, beispielsweise Spinnglas, gebildet sind, welches mit dem Bewehrungsgeflecht (9) mindestens an einer Seite über die Gesamtfläche versteift ist.

4. Kolonnenfüllung nach Anspruch 3,
dadurch gekennzeichnet,
daß die Maschenweite des Bewehrungsgeflechts (9) minde stens um das Zehnfache größer ist als der Abstand der Litzen (6) des kapillaraktiven Gewebes (8).

5. Kolonnenfüllung nach den Ansprüchen 3 und 4,
dadurch gekennzeichnet,
daß das Bewehrungsgeflecht (9) mit dem kapillaraktiven Gewebe (8) überzogen ist.

6. Kolonnenfüllung nach den Ansprüchen 3 und 4,
dadurch gekennzeichnet,
daß das kapillaraktive Gewebe (8) mit dem Bewehrungsgeflecht (9) überzogen ist.

7. Kolonnenfüllung nach Anspruch 1,
dadurch gekennzeichnet,
daß die Wände (4) aus einem Verbundwerkstoff (10) aus anorganischen, beispielsweise Glas- oder Basaltfasern, bestehen, die durch ein anorganisches Bindemittel miteinander verbunden sind, wobei der Verbundwerkstoff (10) mit dem Bewehrungsgeflecht (9) mindestens an einer Seite über die Gesamtfläche versteift ist.

8. Kolonnenfüllung nach Anspruch 1,
dadurch gekennzeichnet,
daß die Wände (4) durch einzelne Bänder (11) aus nachgiebigem nichtmetallischem kapillaraktivem Material, beispielsweise Spinnglas, gebildet sind, wobei die Bänder (11) dicht nebeneinander in der zur Vertikalachse der Wand (4) lotrechten Richtung angeordnet und mit dem Bewehrungsgeflecht (9) beidseitig versteift sind.

9. Kolonnenfüllung nach Anspruch 8,
dadurch gekennzeichnet,
daß die Breite der einzelnen Bänder (11) gleich ist.

10. Kolonnenfüllung nach Anspruch 8,
dadurch gekennzeichnet,
daß sich die Breite der einzelnen Bänder (11) über die Höhe der Füllung von den schmalsten Bändern (11) im Oberteil der Schicht (3) zu den breitesten Bändern (11) im Unterteil der Schicht (3) verändert.

11. Kolonnenfüllung nach den Ansprüchen 8 und 10,
dadurch gekennzeichnet,
daß die Maschenweite des Bewehrungsgeflechts (9) gleich oder kleiner als die Breite des schmalsten Bandes (11) ist.

12. Kolonnenfüllung nach einem der vorhergehenden Ansprüche,
dadurch gekennzeichnet,
daß die Scheitellinien der Falten bzw. Wellen (12, 13) benachbarter Wände (4) unter gleichen oder unterschiedlichen Winkeln zur Vertikalen abwechselnd gegensinnig geneigt sind.

FIG. 1

FIG. 2

EP 0 416 649 A2

FIG. 3

FIG. 4

FIG.5

FIG.6

FIG. 7

FIG. 8